# EUROPÄISCHE PATENTANMELDUNG

(11) **EP 2 096 433 A1**
(43) Veröffentlichungstag der Anmeldung: **02.09.2009**
(21) Anmeldenummer: 08003487.9
(22) Anmeldetag: 26.02.2008
(51) Int. Cl.: G01N 29/22, G01N 29/265

(54) **Vorrichtung zur zerstörungsfreien Materialprüfung eines Prüfgegenstands mit Ultraschallwellen**

(71) Anmelder: SIEMENS AKTIENGESELLSCHAFT, 80333 München (DE)
(72) Erfinder: Clossen-von Lanken Schulz, Michael, 47608 Geldern (DE); Obermayr, Stefan, 46045 Oberhausen (DE); Opheys, Michael, Dr., 41334 Nettetal (DE)

(57) **Zusammenfassung**

Die Erfindung betrifft eine Vorrichtung zur zerstörungsfreien Materialprüfung eines zumindest abschnittsweise massiven Prüfgegenstands durch Beaufschlagen des Prüfgegenstands mit Ultraschallwellen und Erfassen der innerhalb des Prüfgegenstands reflektierten Ultraschallwellen. Die Vorrichtung umfasst wenigstens einen Prüfkopf zum Senden der Ultraschallwellen und zum Erfassen der vom Prüfgegenstand reflektierten Ultraschallwellen, wenigstens einen bewegbaren Schlitten (14), an dem der Prüfkopf angebracht oder anbringbar ist, und eine langgestreckte Schiene (22) zum Führen des Schlittens (14), die an die Struktur der Oberfläche des Prüfgegenstands angepasst oder anpassbar ist. Dabei ist der Schlitten (14) entlang der Schiene (22) bewegbar.

## Beschreibung

Die Erfindung betrifft eine Vorrichtung zur zerstörungsfreien Materialprüfung eines zumindest abschnittsweise massiven Prüfgegenstands durch Beaufschlagen des Prüfgegenstands mit Ultraschallwellen und Erfassen der innerhalb des Prüfgegenstands reflektierten Ultraschallwellen gemäß Patentanspruch 1.

Bei zahlreichen Gegenständen, die vollständig oder teilweise massiv ausgebildet sind, muss deren innere Struktur nach Materialfehlern untersucht werden. Dazu sind zerstörungsfreie Prüfverfahren erforderlich, um Informationen über die innere, nicht-einsehbare Struktur zu erhalten. Dies ist insbesondere bei mechanisch stark beanspruchten Bauteilen notwendig.

Beispielsweise werden Bauteile aus Stahl nach dem Gießen geschmiedet, um anschließend durch Drehen oder durch andere Kaltbehandlungen in die endgültige Form gebracht zu werden. Dabei kann die Prüfung auf innere Materialfehler bereits nach dem Schmieden erfolgen.

Auch solche Bauteile, die bereits im Einsatz sind, müssen regelmäßig einer Materialprüfung unterzogen werden. Dies gilt insbesondere für solche Bauteile, die hohen Belastungen ausgesetzt sind. Das zu prüfende Bauteil kann beispielsweise eine Turbinenschaufel für eine Gas- oder Dampfturbine sein. Insbesondere die Turbinenschaufelfüße werden im Betrieb hohen Belastungen ausgesetzt. Diese Belastungen können zu Rissen führen, die mit dem Ultraschallmessverfahren durch Abtasten der Oberfläche erfasst und lokalisiert werden können. Da die Oberfläche eine komplexe Geometrie aufweist, sind spezielle Messverfahren erforderlich.

Üblicherweise werden solche Metallteile mit Ultraschall geprüft. Dabei werden diejenigen Schallwellen erfasst, die an Grenzflächen im Inneren des Metallteiles reflektiert werden. Mit der Laufzeit der reflektierten Schallwelle kann erfasst und daraus die zurückgelegte Weglänge und somit der Abstand bestimmt werden. Durch eine Einschallung aus verschiedenen Richtungen lassen sich weitere Informationen über den oder die Materialfehler gewinnen. Daraus lassen sich Materialfehler orten. Beispielsweise kann die geometrische Ausrichtung des Materialfehlers auf diese Weise bestimmt werden. Aus der Form der reflektierten Schallwellen lassen sich Rückschlüsse auf die Art des Materialfehlers ziehen.

Durch ein Abtasten der Oberfläche des Prüfgegenstands mit einem Ultraschalldetektor und ein Aufzeichnen der erfassten Daten kann das dem Ultraschall zugängliche Volumen vollständig untersucht werden. Aus den erfassten Daten lässt sich eine Abbildung generieren, die zur Begutachtung verwendet werden kann.

Bei einem bekannten Verfahren werden Formteile, beispielsweise aus Gießharz angefertigt. Die Formteile können passgenau an die abzutastende Oberfläche angelegt werden. In den Formteilen befinden sich Aussparungen, in die ein Ultraschallprüfkopf eingesetzt wird. Um die gesamte zu prüfende Oberfläche abtasten zu können, wird der Ultraschallprüfkopf manuell um diskrete Abstände versetzt. Dies ist jedoch sehr aufwändig.

Bei einem weiteren bekannten Verfahren befindet sich der Ultraschallprüfkopf an einem Schlitten, der über eine Haltevorrichtung an einem benachbarten Prüfgegenstand angebracht ist. Die Haltevorrichtung ist mittels Motoren über die abzutastende Oberfläche bewegbar. Der Prüfkopf wird von Federn an die Oberfläche des Prüfgegenstands gedrückt. Eine optimale Ausrichtung des Prüfkopfes ist dabei jedoch nicht möglich.

Es ist Aufgabe der Erfindung, eine Vorrichtung zur zerstörungsfreien Materialprüfung eines zumindest abschnittsweise massiven Prüfgegenstands der eingangs genannten Art bereit zu stellen, bei der die Möglichkeiten zur Positionierung des Prüfkopfes verbessert sind und der messtechnische Aufwand vermindert ist.

Diese Aufgabe wird durch den Gegenstand gemäß Patentanspruch 1 gelöst.

Gemäß der Erfindung ist vorgesehen, dass die eingangs genannte Vorrichtung folgende Komponenten aufweist:
- wenigstens einen Prüfkopf zum Senden der Ultraschallwellen und zum Erfassen der vom Prüfgegenstand reflektierten Ultraschallwellen,
- wenigstens einen bewegbaren Schlitten, an dem der Prüfkopf angebracht oder anbringbar ist, und
- eine langgestreckte Schiene zum Führen des Schlittens, die an die Struktur der Oberfläche des Prüfgegenstands angepasst oder anpassbar ist, wobei
- der Schlitten entlang der Schiene bewegbar ist.

Der Kern der Erfindung liegt darin, dass der Schlitten entlang einer Schiene bewegbar ist, wobei die Schiene an die Oberfläche des Prüfgegenstands angepasst werden kann. Dabei erstreckt sich die Schiene entlang eines vorbestimmten Weges auf der Oberfläche des Prüfkörpers, und der Schlitten kann entlang dieses Weges bewegt werden. Der Schlitten ist an jeder beliebigen Stelle entlang der Schiene positionierbar. Der Schlitten kann somit kontinuierlich entlang der Schiene bewegt werden.

Vorzugsweise ist die Schiene mittels eines Stereolithographie-Verfahrens hergestellt oder herstellbar. Dadurch kann die Schiene lediglich anhand einer Zeichnung von der Oberfläche des Prüfgegenstands hergestellt und an die Oberfläche des Prüfgegenstands angepasst werden. Die Schiene kann daher auch an besonders komplexe Oberflächen angepasst werden.

Bei der bevorzugten Ausführungsform ist vorgesehen, dass die Schiene aus wenigstens einem Material hergestellt oder herstellbar ist, das durch eine Behandlung mit ultraviolettem Licht härtbar ist. Damit besteht die Schiene zunächst aus einem flexiblen Material und ist entsprechend deformierbar. Anschließend kann die Schiene in der gewünschten Form ausgehärtet werden. Auf diese Weise kann für einen bestimmten Prüfgegenstand sehr schnell eine passende Schiene und somit eine geeignete Prüfvorrichtung bereitgestellt werden. Beispielsweise ist die Schiene aus wenigstens einem Epoxydharz hergestellt oder herstellbar.

Insbesondere umfasst die Schiene eine oder mehrere Führungsnuten und/oder Führungsrillen, die komplementär zum Schlitten oder zu einem Abschnitt des Schlittens ausgebildet sind. Dies trägt zu einer präzisen Führung des Schlittens in der Schiene bei.

Weiterhin kann der Schlitten wenigstens eine Führungsrolle aufweisen. Dies ermöglicht eine reibungsarme und präzise Bewegung des Schlittens innerhalb der Schiene.

Vorzugsweise sind wenigstens eine Führungsrolle und wenigstens eine Führungsrille bzw. Führungsnute miteinander in Eingriff oder in Eingriff bringbar. Dadurch ist die Bewegungsmöglichkeit des Schlittens eindeutig vorgegeben, nämlich entlang der Schiene.

Bei der bevorzugten Ausführungsform ist vorgesehen, dass der Schlitten wenigstens einen Motor zum Antreiben des Schlittens entlang der Schiene aufweist.

Dazu kann vorgesehen sein, dass der Schlitten wenigstens ein mit dem Motor gekoppeltes Zahnrad oder dergleichen aufweist, das kraftschlüssig mit der Schiene in Eingriff ist oder in Eingriff bringbar ist. Dadurch besteht ein eindeutiger Zusammenhang zwischen der Anzahl der vollzogenen Umdrehungen des Motors und der Position des Schlittens.

Weiterhin kann die Schiene wenigstens eine Zahnstange aufweisen. Alternativ oder zusätzlich kann in oder an der Schiene wenigstens eine Verzahnung ausgebildet sein. Dabei kann das Zahnrad mit der Zahnstange bzw. der Verzahnung in Eingriff sein oder in Eingriff gebracht werden. Dies bewirkt eine rutschfreie Bewegung des Schlittens.

Außerdem kann der Prüfkopf relativ zu dem Schlitten bewegbar sein. Dies bewirkt wenigstens einen weiteren Freiheitsgrad der Bewegung des Prüfkopfes.

Vorzugsweise ist der Prüfkopf an dem Schlitten schwenkbar um eine Achse, die sich parallel zur Längsachse der Schiene erstreckt. Auf diese Weise lässt sich mit zwei Freiheitsgraden der Bewegung des Prüfkopfes der Erfassungsbereich optimieren.

Weiterhin kann vorgesehen sein, dass der Prüfkopf und der Schlitten durch wenigstens eine Rückstelleinrichtung miteinander gekoppelt sind. Damit kann eine stabile Lage des Prüfkopfes definiert und realisiert werden.

Beispielsweise umfasst die Rückstelleinrichtung wenigstens zwei miteinander wechselwirkende Magnetelemente. Alternativ oder zusätzlich kann die Rückstelleinrichtung wenigstens ein Federelement aufweisen.

Weiterhin kann vorgesehen sein, dass wenigstens zwei Führungsrollen relativ zueinander bewegbar am Schlitten angebracht sind, so dass die Positionen der Führungsrollen an den Verlauf der Schiene anpassbar sind. Damit lässt sich erreichen, dass sich auf einfache Weise die Form des Schlittens an die Schiene anpasst.

Vorzugsweise umfasst der Schlitten wenigstens zwei Rahmenteile, die miteinander schwenkbar verbunden oder verbindbar sind, wobei an jedem Teil wenigstens eine Führungsrolle drehbar befestigt ist. Dabei können die wenigstens zwei Rahmenteile um eine Achse schwenkbar sein, die sich entlang der Bewegungsrichtung des Schlittens erstreckt. Dies ermöglicht eine besonders einfache Anpassung der Form des Schlittens an den Verlauf der Schiene.

Beispielsweise sind an wenigstens einem Rahmenteil zwei Führungsrollen nebeneinander angeordnet. In diesen Fall bildet dieses Rahmenteil mit den beiden Führungsrollen eine starre Achse, die schwenkbar bezüglich des anderen Rahmenteils ist.

Bei der bevorzugten Ausführungsform sind an wenigstens zwei Rahmenteilen jeweils zwei Führungsrollen nebeneinander angeordnet, so dass die beiden Achsen mit jeweils zwei Führungsrollen zueinander schwenkbar sind.

Auch für die Kopplung der Rahmenteile kann vorgesehen sein, dass die wenigstens zwei Rahmenteile durch wenigstens eine Rückstelleinrichtung miteinander gekoppelt sind.

Beispielsweise umfasst die Rückstelleinrichtung wenigstens zwei miteinander wechselwirkende Magnetelemente. Alternativ oder zusätzlich kann die Rückstelleinrichtung wenigstens ein Federelement aufweisen.

Außerdem kann die Vorrichtung wenigstens eine Steuerungseinrichtung aufweisen. Die Steuerungseinrichtung kann sowohl das Senden als auch das Erfassen der Ultraschallwellen steuern. Weiterhin kann auch die Bewegung des Prüfkopfes und/oder Schlittens von der Steuereinrichtung gesteuert werden.

Bei der bevorzugten Ausführungsform ist die Vorrichtung für die Materialprüfung eines Prüfgegenstands aus Metall vorgesehen, insbesondere für die Materialprüfung eines geschmiedeten Bauteils. Besonders geeignet ist die Vorrichtung für die Materialprüfung eines Turbinenrads, einer Turbineradschaufel oder eines Turbineradschaufelfußes.

Weitere Merkmale, Vorteile und besondere Ausführungsformen der Erfindung sind Gegenstand der Unteransprüche.

Nachstehend wird das Verfahren gemäß der Erfindung in der Figurenbeschreibung anhand bevorzugter Ausführungsformen und unter Bezugnahme auf die beigefügten Zeichnungen näher erläutert. Es zeigen:
- FIG. 1: eine schematische Perspektivansicht eines Schlittens für eine Vorrichtung zur zerstörungsfreien Materialprüfung eines Prüfgegenstands gemäß einer bevorzugten Ausführungsform der Erfindung,
- FIG. 2: eine schematische Perspektivansicht einer Schiene für die Vorrichtung zur zerstörungsfreien Materialprüfung des Prüfgegenstands gemäß der bevorzugten Ausführungsform der Erfindung,
- FIG. 3: eine detaillierte Perspektivansicht der Schiene für die Vorrichtung zur zerstörungsfreien Materialprüfung des Prüfgegenstands gemäß der bevorzugten Ausführungsform der Erfindung, und
- FIG. 4: eine schematische perspektivische Explosionsansicht des Schlittens mit einem Prüfkopf gemäß der bevorzugten Ausführungsform der Erfindung.

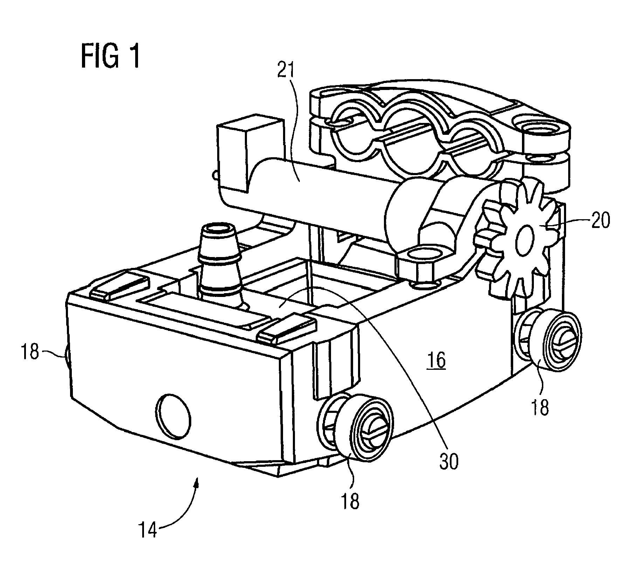

FIG. 1 zeigt schematische Perspektivansicht eines Schlittens 14 für eine Vorrichtung zur zerstörungsfreien Materialprüfung eines Prüfgegenstands gemäß einer bevorzugten Ausführungsform der Erfindung.

Der Schlitten 14 ist im Wesentlichen als rechteckiger Rahmen ausgebildet. Der Schlitten 14 umfasst mehrere Einzelteile, die meist aus Kunststoff hergestellt sind. An den beiden äußeren Längsseiten 16 des Schlittens 14 befinden sich jeweils zwei Führungsrollen 18. Die Führungsrollen 18 sind drehbar am Schlitten 14 befestigt. Insbesondere sind die Führungsrollen 18 drehbar an dem rechteckigen Rahmen befestigt. In dieser konkreten Ausführungsform sind die Führungsrollen 18 aus Metall hergestellt. Der rechteckige Rahmen ist in diesem Ausführungsbeispiel zweiteilig ausgebildet, was weiter unten detaillierter beschrieben wird.

An einer der beiden Längsseiten 16 befindet sich oberhalb der Führungsrollen 18 ein Zahnrad 20. Das Zahnrad 20 ist ebenfalls drehbar an der einen Längsseite 16 angebracht. Weiterhin ist das Zahnrad 20 als Antriebsrad ausgebildet und wird von einem Elektromotor 21 angetrieben.

Der Schlitten 14 ist zur Aufnahme wenigstens eines Prüfkopfes vorgesehen, der in FIG. 1 nicht explizit dargestellt ist. Der Schlitten 14 umfasst im Wesentlichen den rechteckigen Rahmen und eine Aufnahmeeinrichtung 30 für den Prüfkopf. Die Aufnahmeeinrichtung 30 für den Prüfkopf ist über eine Rückstelleinrichtung in dem rechteckigen Rahmen angebracht.

Der Prüfkopf ist zum Senden der Ultraschallwellen und zum Erfassen der vom Prüfgegenstand reflektierten Ultraschallwellen vorgesehen. Bei der bevorzugten Ausführungsform ist der Prüfkopf schwenkbar an dem Schlitten 14 angebracht. Beispielsweise erstreckt sich die Schwenkachse parallel zur Bewegungsrichtung des Schlittens 14.

Bei der bevorzugten Ausführungsform weist der Schlitten 14 eine Rückstelleinrichtung auf, so dass der Prüfkopf automatisch in eine vorbestimmte Position, insbesondere in eine zentrale Position schwenkbar ist. Die Rückstelleinrichtung kann Magnetelemente oder Federelemente aufweisen.

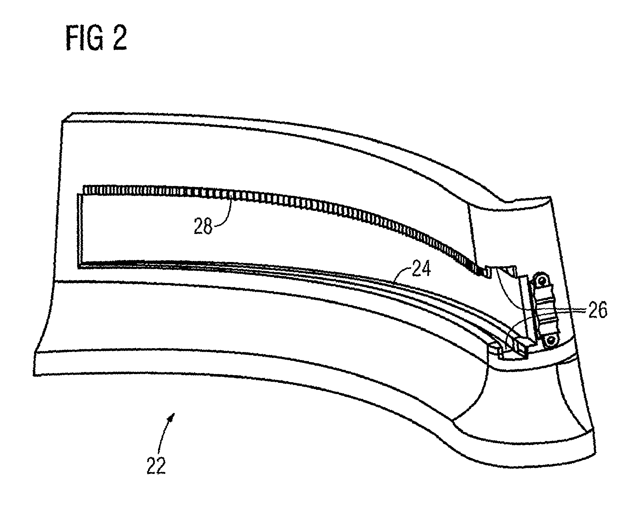

In FIG. 2 ist eine schematische Perspektivansicht einer Schiene 22 für die Vorrichtung zur zerstörungsfreien Materialprüfung des Prüfgegenstands gemäß der bevorzugten Ausführungsform der Erfindung dargestellt.

Die Schiene 22 ist in dieser bevorzugten Ausführungsform aus Epoxydharz hergestellt. Dadurch kann die Schiene 22 durch eine Behandlung mit ultraviolettem Licht gehärtet werden. Weiterhin ist die Schiene 22 vorzugsweise mittels eines Stereolithographie-Verfahrens hergestellt. Dies ermöglicht, dass die Schiene lediglich anhand einer Zeichnung von der Oberfläche des Prüfgegenstands hergestellt werden kann.

Die Schiene 22 ist als ein lang gestreckter rechteckiger Rahmen ausgebildet. Die Kontur der Schiene 22 ist an die Oberfläche des Prüfkörpers angepasst, so dass eine der beiden großflächigen Seiten im Wesentlichen komplementär zur Oberfläche des Prüfkörpers ausgebildet und während der Materialprüfung dem Prüfkörper zugewandt ist.

An den beiden inneren Längsseiten 24 befindet sich jeweils eine Führungsrille 26. Die beiden Führungsrillen 26 erstrecken sich parallel zur Längsachse der Schiene 22, wobei die beiden offenen Seiten der Führungsrillen 26 einander zugewandt sind. Die Führungsrillen 26 sind somit nach Innen hin offen. Weiterhin umfasst die Schiene 22 eine Verzahnung 28, die sich ähnlich einer Zahnstange entlang der Längsachse der Schiene 22 erstreckt.

Die Schiene 22 und der Schlitten 14 sind hinsichtlich ihrer Geometrie so aneinander angepasst, dass der Schlitten 14 innerhalb der Schiene 22 verschiebbar ist. Dabei sind die Führungsrollen 18 des Schlittens 14 in den Führungsrillen 26 der Schiene 22 bewegbar, und das Zahnrad 18 des Schlittens 14 ist in Eingriff mit der Verzahnung 28.

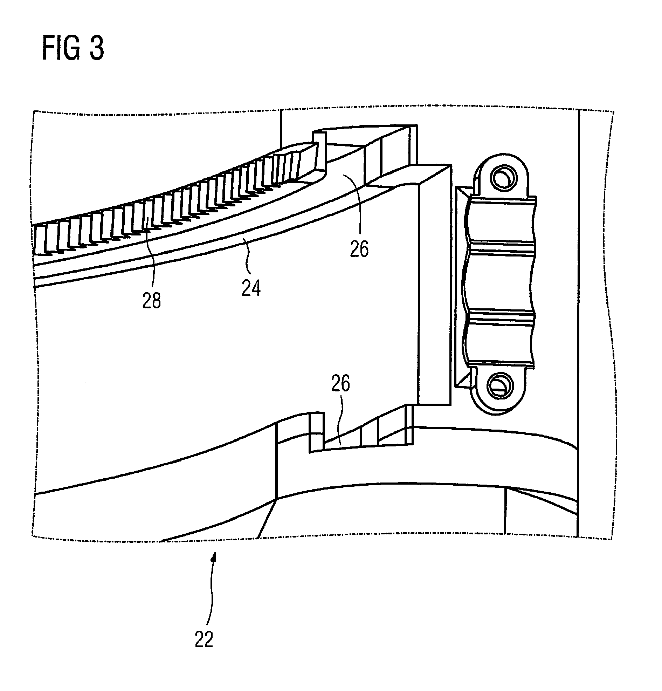

FIG. 3 zeigt eine detaillierte Perspektivansicht der Schiene 22 für die Vorrichtung zur zerstörungsfreien Materialprüfung des Prüfgegenstands gemäß der bevorzugten Ausführungsform der Erfindung. FIG. 3 verdeutlicht einige Details der Schiene 22. Die Führungsrillen 26 befinden sich an den beiden inneren Längsseiten 24. Die beiden Führungsrillen 26 sind auch zueinander parallel. Der Abstand zwischen den Führungsrillen 26 ist im Wesentlichen konstant. Die Führungsrillen 26 sind nach Innen hin offen, und deren offenen Seiten sind einander zugewandt. Die Verzahnung 28 ist so ausgebildet und angeordnet, dass das Zahnrad 20 mit der Verzahnung 28 und zugleich die Führungsrollen 18 mit den entsprechenden Führungsrillen 26 in Eingriff sind.

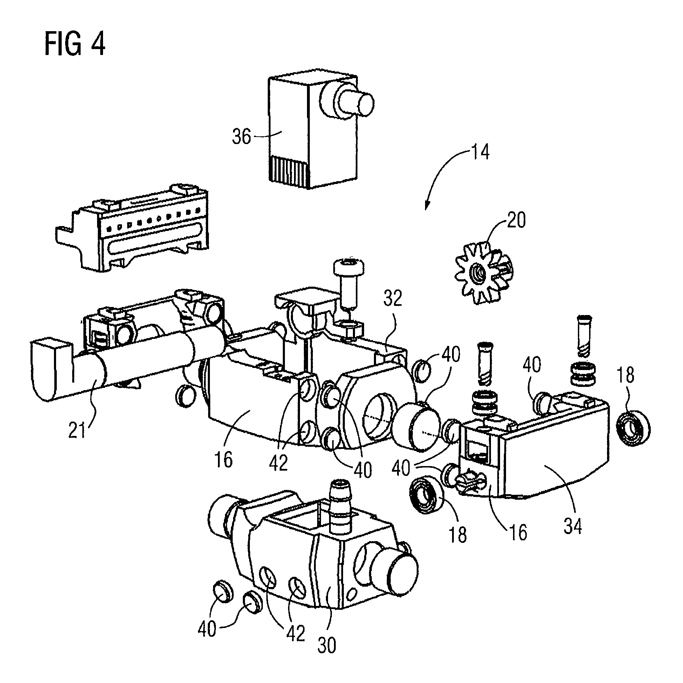

FIG. 4 zeigt eine schematische perspektivische Explosionsansicht des Schlittens 14 mit einem Prüfkopf 36 gemäß der bevorzugten Ausführungsform der Erfindung. Der Schlitten 14 umfasst den rechteckigen Rahmen, der wiederum einen ersten Rahmenteil 32 und einen zweiten Rahmenteil 34 aufweist. Die Aufnahmeeinrichtung 30 für den Prüfkopf 36 ist innerhalb des ersten Rahmenteils 32 vorgesehen. Der Prüfkopf 36 ist wiederum innerhalb der Aufnahmeeinrichtung 30 vorgesehen. Das als Zahnrad 20 ausgebildete Antriebsrad wird von dem Elektromotor 21 angetrieben.

Zwei nebeneinander liegende Führungsrollen 18 sind an dem ersten Rahmenteil 32 angebracht. Zwei weitere nebeneinander liegende Führungsrollen 18 sind an dem zweiten Rahmenteil 34 angebracht. Der erste Rahmenteil 32 und der zweite Rahmenteil 34 sind zueinander schwenkbar entlang der Längachse des Schlittens 14 verbunden oder verbindbar. Somit sind die beiden Achsen der Führungsrollen 18 zueinander schwenkbar, so dass der Schlitten 14 an den Verlauf der Schiene 22 anpassbar ist. Durch das Schwenken der Achsen haben alle vier Führungsrollen 18 stets Berührung mit der Schiene 22.

Der Schlitten 14 umfasst eine Mehrzahl von Magnetelementen 40, die zwei Rückstelleinrichtungen bilden. Dabei wirkt eine Rückstelleinrichtung zwischen der Aufnahmeeinrichtung 30 und dem ersten Rahmenteil 32. Eine weitere Rückstelleinrichtung wirkt zwischen dem ersten Rahmenteil 32 und dem zweiten Rahmenteil 34. An der Aufnahmeeinrichtung 30, an dem ersten Rahmenteil 32 und an dem zweiten Rahmenteil 34 befinden sich Ausnehmungen 42, die zur Aufnahme der Magnetelemente 40 vorgesehen sind. Die Ausnehmungen 42 sind geringfügig größer als die entsprechenden Magnetelemente 40.

Die Aufnahmeeinrichtung 30 ist senkrecht zur Bewegungsrichtung des Schlittens 14 bezüglich des ersten Rahmenteils 32 in zwei Richtungen schwenkbar und mittels der Rückstelleinrichtung in eine Mittelstellung automatisch rückstellbar. Das zweite Rahmenteil 34 ist um die Achse, die sich parallel zur Bewegungsrichtung des Schlittens 14 erstreckt, ebenfalls bezüglich des ersten Rahmenteils 32 schwenkbar und mittels der Rückstelleinrichtung in eine Mittelstellung automatisch rückstellbar. In den Mittelstellungen befinden sich die korrespondieren Ausnehmungen genau gegenüber.

Der Prüfkopf ist somit einerseits entlang der Schiene 22 bewegbar und andererseits senkrecht dazu schwenkbar, so dass ein verhältnismäßig großer Bereich beschallt und erfasst werden kann. Für den Prüfkopf sind dazu lediglich zwei Freiheitsgrade der Bewegung erforderlich, wodurch ein relativ einfacher Algorithmus für die Steuerung des Prüfkopfes und die Erfassung und Auswertung der reflektierten Schallwellen ausreicht.

Die Materialprüfung erfolgt, indem ein Prüfkopf, der an dem Schlitten 14 angebracht ist, entlang der Schiene 22 und somit entlang der äußeren Oberfläche des Prüfgegenstands bewegt wird. Dabei ist der Prüfkopf um eine Achse schwenkbar, die parallel zur Längsachse, zumindest aber zur Tangente der Schiene 22 ist.

Mit der Vorrichtung gemäß der Erfindung ist es nicht unbedingt notwendig, dass die gesamte Oberfläche des Prüfgegenstands abgetastet wird, um das gesamte Volumen des Prüfgegenstands zu erfassen. Es kann beispielsweise eine bestimmte Strecke oder ein bestimmter Weg auf der Oberfläche abgetastet werden, da durch die Schwenkbewegungen des Prüfkopfes zumindest der relevante Bereich des Volumens auch ohne die vollständige Abtastung der Oberfläche erfasst werden kann.

Das erfasste Signal entsteht insbesondere durch den reflektierten Anteil eines Ultraschallimpulses an sprunghaften räumlichen Änderungen des Wellenwiderstands innerhalb des Prüfgegenstands. Diese Änderungen werden dann als Materialfehler interpretiert, wenn dort keine konstruktiv bedingten Materialgrenzen oder Materialübergänge vorhanden sind. Das erfasste Signal enthält Informationen über die Amplitude und die Laufzeit der reflektierten Schallwelle. Da die Schallgeschwindigkeit im Material des Prüfgegenstands bekannt ist, lässt sich aus der Laufzeit auch der Abstand zwischen dem Materialfehler und der Position des Prüfkopfs bestimmen.

## Patentansprüche

1. Vorrichtung zur zerstörungsfreien Materialprüfung eines zumindest abschnittsweise massiven Prüfgegenstands durch Beaufschlagen des Prüfgegenstands mit Ultraschallwellen und Erfassen der innerhalb des Prüfgegenstands reflektierten Ultraschallwellen,
wobei die Vorrichtung folgende Komponenten aufweist:
- wenigstens einen Prüfkopf zum Senden der Ultraschallwellen und zum Erfassen der vom Prüfgegenstand reflektierten Ultraschallwellen,
- wenigstens einen bewegbaren Schlitten (14), an dem der Prüfkopf angebracht oder anbringbar ist, und
- eine langgestreckte Schiene (22) zum Führen des Schlittens (14), die an die Struktur der Oberfläche des Prüfgegenstands angepasst oder anpassbar ist, wobei
- der Schlitten (14) entlang der Schiene (22) bewegbar ist.

2. Vorrichtung nach Anspruch 1,
**dadurch gekennzeichnet, dass**
die Schiene (22) mittels eines Stereolithographie-Verfahrens hergestellt oder herstellbar ist.

3. Vorrichtung nach Anspruch 1 oder 2,
**dadurch gekennzeichnet, dass**
die Schiene (22) aus wenigstens einem Material hergestellt oder herstellbar ist, das durch eine Behandlung mit ultraviolettem Licht härtbar ist.

4. Vorrichtung nach einem der vorhergehenden Ansprüche,
**dadurch gekennzeichnet, dass**
die Schiene (22) aus wenigstens einem Epoxydharz hergestellt oder herstellbar ist.

5. Vorrichtung nach einem der vorhergehenden Ansprüche,
**dadurch gekennzeichnet, dass**
die Schiene (22) eine oder mehrere Führungsnuten und/oder Führungsrillen (26) aufweist, die komplementär zum Schlitten (14) oder zu einem Abschnitt des Schlittens (14) ausgebildet sind.

6. Vorrichtung nach einem der vorhergehenden Ansprüche,
**dadurch gekennzeichnet, dass**
der Schlitten (14) wenigstens eine Führungsrolle (18) aufweist.

7. Vorrichtung nach Anspruch 5 und 6,
**dadurch gekennzeichnet, dass**
das wenigstens eine Führungsrolle (18) und wenigstens eine Führungsrille (26) miteinander in Eingriff sind oder in Eingriff bringbar sind.

8. Vorrichtung nach einem der vorhergehenden Ansprüche,
**dadurch gekennzeichnet, dass**
der Schlitten (14) wenigstens einen Motor (21) zum Antreiben des Schlittens (14) entlang der Schiene (22) aufweist.

9. Vorrichtung nach einem der vorhergehenden Ansprüche,
**dadurch gekennzeichnet, dass**
der Schlitten (14) wenigstens ein mit dem Motor (21) gekoppeltes Zahnrad (20) oder dergleichen aufweist, das kraftschlüssig mit der Schiene (22) in Eingriff ist oder in Eingriff bringbar ist.

10. Vorrichtung nach einem der vorhergehenden Ansprüche,
**dadurch gekennzeichnet, dass**
die Schiene (22) wenigstens eine Zahnstange (28) aufweist.

11. Vorrichtung nach einem der vorhergehenden Ansprüche,
**dadurch gekennzeichnet, dass**
in oder an der Schiene (22) wenigstens eine Verzahnung (28) ausgebildet ist.

12. Vorrichtung nach Anspruch 7 und 8 oder 9,
**dadurch gekennzeichnet, dass**
das Zahnrad (20) mit der Zahnstange bzw. der Verzahnung (28) in Eingriff ist oder in Eingriff bringbar ist.

13. Vorrichtung nach einem der vorhergehenden Ansprüche,
**dadurch gekennzeichnet, dass**
der Prüfkopf relativ zu dem Schlitten (14) bewegbar ist.

14. Vorrichtung nach einem der vorhergehenden Ansprüche,
**dadurch gekennzeichnet, dass**
der Prüfkopf an dem Schlitten (14) schwenkbar um eine Achse ist, die sich parallel zur Längsachse der Schiene (22) erstreckt.

15. Vorrichtung nach Anspruch 13 oder 14,
**dadurch gekennzeichnet, dass**
der Prüfkopf und der Schlitten (14) durch wenigstens eine Rückstelleinrichtung miteinander gekoppelt sind.

16. Vorrichtung nach Anspruch 15,
**dadurch gekennzeichnet, dass**
die Rückstelleinrichtung wenigstens zwei miteinander wechselwirkende Magnetelemente aufweist.

17. Vorrichtung nach Anspruch 15 oder 16,
**dadurch gekennzeichnet, dass**
die Rückstelleinrichtung wenigstens ein Federelement aufweist.

18. Vorrichtung nach einem der vorhergehenden Ansprüche,
**dadurch gekennzeichnet, dass**
wenigstens zwei Führungsrollen (18) relativ zueinander bewegbar am Schlitten (14) angebracht sind,
so dass die Positionen der Führungsrollen (18) an den Verlauf der Schiene (22) anpassbar sind.

19. Vorrichtung nach einem der vorhergehenden Ansprüche,
**dadurch gekennzeichnet, dass**
der Schlitten (14) wenigstens zwei Rahmenteile (32, 34) umfasst, die miteinander schwenkbar verbunden oder verbindbar sind,
wobei an jedem Teil (32, 24) wenigstens eine Führungsrolle (18) drehbar befestigt ist.

20. Vorrichtung nach Anspruch 19,
**dadurch gekennzeichnet, dass**
die wenigstens zwei Rahmenteile (32, 34) um eine Achse schwenkbar sind, die sich entlang der Bewegungsrichtung des Schlittens (14) erstreckt.

21. Vorrichtung nach Anspruch 19 oder 20,
**dadurch gekennzeichnet, dass**
an wenigstens einem Rahmenteil (32, 34) zwei Führungsrollen (18) nebeneinander angeordnet sind.

22. Vorrichtung nach einem der Ansprüche 19 bis 21,
**dadurch gekennzeichnet, dass**
an wenigstens zwei Rahmenteilen (32, 34) jeweils zwei Führungsrollen (18) nebeneinander angeordnet sind,
so dass die Achsen mit jeweils zwei Führungsrollen (18) zueinander schwenkbar sind.

23. Vorrichtung nach einem der Ansprüche 19 bis 22,
**dadurch gekennzeichnet, dass**
die wenigstens zwei Rahmenteile (32, 34) durch wenigstens eine Rückstelleinrichtung miteinander gekoppelt sind.

24. Vorrichtung nach Anspruch 23,
**dadurch gekennzeichnet, dass**
die Rückstelleinrichtung wenigstens zwei miteinander wechselwirkende Magnetelemente (40) aufweist.

25. Vorrichtung nach Anspruch 23 oder 24,
**dadurch gekennzeichnet, dass**
die Rückstelleinrichtung wenigstens ein Federelement aufweist.

26. Vorrichtung nach einem der vorhergehenden Ansprüche,
**dadurch gekennzeichnet, dass**
die Vorrichtung wenigstens eine Steuerungseinrichtung aufweist.

27. Vorrichtung nach Anspruch 26,
**dadurch gekennzeichnet, dass**
die Steuerungseinrichtung das Senden und/oder Erfassen der Ultraschallwellen steuert.

28. Vorrichtung nach Anspruch 26 oder 27,
**dadurch gekennzeichnet, dass**
die Steuerungseinrichtung die Bewegung des Prüfkopfes und/oder Schlittens (14) steuert.
